# EUROPÄISCHE PATENTANMELDUNG

(11) **EP 2 837 909 A2**
(43) Veröffentlichungstag der Anmeldung: **18.02.2015**
(21) Anmeldenummer: 14177465.3
(22) Anmeldetag: 17.07.2014
(51) Int. Cl.: G01C 15/00, A01B 79/00

(54) **Verfahren und Anordnung zur Kartierung eines landwirtschaftlichen Feldes**

(30) Priorität: 16.08.2013 DE 102013216270
(71) Anmelder: Deere & Company, Moline, IL 61265 (US)
(72) Erfinder: Kormann, Dr. Georg, 66482 Zweibrücken (DE); Feldhaus, Johannes, 53639 Königswinter (DE); Blank, Sebastian, 67657 Kaiserslautern (DE)
(74) Vertreter: Holst, Sönke

(57) **Zusammenfassung**

Ein Verfahren zur Kartierung eines landwirtschaftlichen Feldes (32) umfasst folgende Schritte:
(a) Ausrüsten eines Fahrzeugs (10) mit einer Messeinrichtung (44) zum Erfassen von Landmarken (78), einem Positionsbestimmungssignalempfänger (40) und einem Sensor (82) zur Bestimmung der Orientierung des Fahrzeugs (10) im Raum,
(b) Verbringen des Fahrzeugs (10) an eine Position auf dem Feld (32) oder in der Nähe des Felds (32),
(c) Bereitstellen einer Landmarke (78) an einem definierten Punkt des Felds (32),
(d) Erfassen der Position des Positionsbestimmungssignalempfängers (40) sowie der Orientierung des Fahrzeugs (10),
(e) Erfassen des Abstandes der Landmarke (78) von der Messeinrichtung (44) und der räumlichen Ausrichtung der Landmarke (78) gegenüber dem Fahrzeug (10),
(f) Berechnen der Position der Landmarke (78) anhand der Ergebnisse der Schritte (d) und (e) und Abspeichern der berechneten Position,
(g) Wiederholen der Schritte (c) bis (f) an weiteren definierten Punkten des Feldes (32), bis das Feld (32) kartiert ist.

## Beschreibung

Die Erfindung betrifft ein Verfahren und eine Anordnung zur Kartierung eines landwirtschaftlichen Feldes.

### Stand der Technik

Beim Ausbringen landwirtschaftlich eingesetzter Mittel, wie Dünger oder Insektiziden, sind u.a. auf Grund gesetzlicher Vorgaben die Grenzen des jeweiligen Feldes einzuhalten. Außerdem sind Schutzzonen gegenüber Gewässern oder anderen Gebieten zu beachten.

Der Landwirt hat die Möglichkeit, bei einer manuellen Ansteuerung der Maschine zum Ausbringen der Mittel einen hinreichenden Sicherheitsabstand zu den Grenzen und eventuellen Schutzzonen einzuhalten. Dies führt dazu, dass der Abstand in der Regel größer als nötig gewählt wird, sodass auf dem nicht mit dem Mittel beaufschlagten Teil des Felds weniger Ertrag erzielt wird als anderenfalls möglich wäre.

Weiterhin sind elektronische Ansteuerungen von Maschinen zum Ausbringen der Mittel bekannt (DE 195 32 870 A1), die auf einer abgespeicherten Karte mit den ortsspezifisch festgelegten Ausbringmengen des Materials und einer Positionserfassung der Maschine beruhen, die mittels eines satellitenbasierten Positionsbestimmungssystems erfolgt. Die Maschine umfasst verstellbare Ausbringorgane (z.B. Düsen an einer Feldspritze), die derart angesteuert werden, dass an der jeweiligen Position des Feldes die jeweils in der Karte vordefinierte Menge ausgebracht wird, wobei die Mengen außerhalb der Bearbeitungsfläche null sind, indem beispielsweise Teilbreiten ganz ausgeschaltet werden. Diese Vorgehensweise erfordert jedoch, dass die Lage der Bearbeitungsfläche des Feldes hinreichend genau bekannt und dokumentiert ist. Eine Dokumentation der Lage der Bearbeitungsfläche ist auch für die Vorplanung von Bodenbearbeitung, Saatgutausbringungs-, Pflanzoder Erntearbeiten sinnvoll, um beispielsweise die Fahrspuren parallel zur Grenzlinie anzulegen.

Im Stand der Technik wurde hierzu vorgeschlagen, die Bearbeitungsfläche durch Umfahren des Feldes mit einem Fahrzeug unter gleichzeitiger Erfassung der Position des Fahrzeugs mittels eines satellitenbasierten Positionserfassungssystems (z.B. GPS, Global Positioning System) zu gewinnen (s. DE 43 42 171 A1). Bei dieser Vorgehensweise muss das Fahrzeug genau auf den Bearbeitungsfläche bewegt werden. Ist das nicht möglich, z.B. weil dort Zäune stehen, wird ein Abstand eingegeben und der Fahrer versucht, stets mit dem eingegebenen Abstand von der Feldgrenze zu fahren. Dabei sind Fehler nie komplett zu vermeiden.

Weiterhin besteht die Möglichkeit, eine Arbeitsperson mit einem tragbaren Gerät auszustatten, mit dem er über ein Feld geht, um georeferenzierte Daten vom Feld aufzunehmen (P. Jürschik: Mit dem Computer auf das Feld, Landtechnik 3/1998, S. 142-143). Das tragbare Gerät ist als Notebook oder so genannter Pen-Computer ausgeführt und mit einem externen DGPS-Empfänger verbunden, dessen Korrektursignale über Radiowellen von stationären Sendern übertragen werden. Der Bediener geht mit dem Gerät über das Feld, um dort u.a. die Schlagkonturen zu erfassen. Hier ist ein relativ hoher Zeitaufwand erforderlich.

Schließlich wurde vorgeschlagen, die Bearbeitungsfläche durch eine Auswertung von Luftbildaufnahmen zu evaluieren (DE 44 23 083 A1), was nicht immer zu hinreichend genauen Ergebnissen führt.

### Aufgabe der Erfindung

Das der Erfindung zu Grunde liegende Problem wird darin gesehen, ein Verfahren und eine Anordnung zur Kartierung eines landwirtschaftlich genutzten Felds aufzuzeigen, dass die erwähnten Nachteile nicht oder in einem verminderten Maße aufweist.

### Lösung

Dieses Problem wird erfindungsgemäß durch die Lehre der Patentansprüche 1 und 10 gelöst, wobei in den weiteren Patentansprüchen Merkmale aufgeführt sind, die die Lösung in vorteilhafter Weise weiterentwickeln.

Ein Verfahren zur Kartierung eines landwirtschaftlichen Feldes umfasst folgende Schritte:
(a) Ausrüsten eines Fahrzeugs mit einer Messeinrichtung zum Erfassen von Landmarken, einem Positionsbestimmungssignalempfänger und einem Sensor zur Bestimmung der Orientierung des Fahrzeugs im Raum,
(b) Verbringen des Fahrzeugs an eine Position auf dem Feld oder in der Nähe des Felds,
(c) Bereitstellen einer Landmarke an einem definierten Punkt des Feldes,
(d) Erfassen der Position des Positionsbestimmungssignalempfängers sowie der Orientierung des Fahrzeugs,
(e) Erfassen des Abstandes der Landmarke von der Messeinrichtung und der räumlichen Ausrichtung der Landmarke gegenüber dem Fahrzeug,
(f) Berechnen der Position der Landmarke anhand der Ergebnisse der Schritte (d) und (e) und Abspeichern der berechneten Position,
(g) Wiederholen der Schritte (c) bis (f) an weiteren definierten Punkten des Felds, bis das Feld kartiert ist.

Auf diese Weise wird die Kartierung des Feldes wesentlich vereinfacht, denn es werden lediglich die Position des Positionsbestimmungssignalempfängers und die Ausrichtung des (landgebundenen) Fahrzeugs im Raum einerseits sowie die Ausrichtung und der Abstand der an einem definierten Punkt des Felds (z.B. der Grenze des Feldes oder einer dort bereits vorhandenen Bearbeitungsfläche) aufgestellten Landmarke gegenüber dem Fahrzeug andererseits erfasst. Aus diesen Daten wird dann die Position der Landmarke und somit der zu kartierenden Position des Felds bestimmt. Dadurch wird der Aufwand zur Kartierung des Feldes gegenüber dem Stand der Technik verringert und die Genauigkeit verbessert. Die Bereitstellung der Landmarke kann entweder derart erfolgen, dass eine Landmarke an der definierten Position aktiv aufgestellt oder angebracht wird, oder es wird auf ein bereits an der definierten Position befindliches Merkmal zurückgegriffen, wie einen Zaun, eine Hecke, einen Graben oder eine bei einem vorhergehenden Bearbeitungsvorgang erzeugte Furche oder Pflanzenreihe.

Bei der definierten Position, an welcher die Landmarke angebracht wird oder schon vorhanden ist, kann es sich um die durch die äußere (durch Grenzsteine markierte) Grenze eines Feldes handeln oder um eine etwas kleinere Fläche, falls die Randbereiche des Feldes beispielsweise durch Hecken, Knicks oder anderen Bewuchs nicht bearbeitet werden können. Es kann sich aber auch um andere Objekte auf dem Feld handeln, z.B. Bauminseln, Steine, Gräben, Masten, Bauwerke oder andere Hindernisse, die dann nicht zu bearbeitende Ausschnitte in der möglichen Bearbeitungsfläche des Feldes definieren. Auch besteht die Möglichkeit, anderweitig zu bearbeitende Objekte auf dem Feld zu kartieren, wie beispielsweise Verdichtungsflächen, die aufzulockern sind. Falls die äußeren Grenzen des Feldes kartiert werden, die tatsächliche Bearbeitung aber im Abstand davon erfolgen soll, kann anschließend eine (zweite) Karte erzeugt werden, in der dieser Abstand berücksichtigt wird.

Die Messeinrichtung kann einen winkelsensitiven Sensor zur Erfassung der Landmarke umfassen, bei dem es sich beispielsweise um eine Kamera handeln kann. In diesem Fall wird die Orientierung der Landmarke gegenüber dem Fahrzeug, d.h. der vertikale und horizontale Winkel zwischen der Landmarke und dem Fahrzeug, direkt aus dem Signal des Sensors abgeleitet. Alternativ oder zusätzlich ist die Messeinrichtung gegenüber dem Fahrzeug winkelverstellbar und mit Mitteln zur Erfassung des jeweiligen Winkels gegenüber dem Fahrzeug ausgestattet, d.h. die als Entfernungsmesser ausgeführte Messeinrichtung tastet den Raum zweidimensional ab und der jeweilige vertikale und horizontale Abtastwinkel gegenüber dem Fahrzeug wird erfasst.

Bei einer möglichen Ausführungsform wird im Schritt (f) zunächst anhand der Position des Positionsbestimmungssignalempfängers sowie der mit dem Sensor erfassten Orientierung des Fahrzeugs die Position und räumliche Orientierung eines auf die Messeinrichtung bezogenen Referenzpunkts berechnet. Dieser Referenzpunkt entspricht bei einer abtastenden Messeinrichtung der Lage der horizontalen und/oder vertikalen Schwenkachse der Abtastbewegung, wobei sich diese Schwenkachsen vorzugsweise im Referenzpunkt schneiden. Bei einer Kamera wird der Referenzpunkt beispielsweise in der Mitte des Bildsensors liegen. Anschließend wird die Position der Landmarke anhand der Position des Referenzpunkts sowie des Abstandes der Landmarke von der Messeinrichtung und der Ausrichtung der Landmarke gegenüber dem Fahrzeug berechnet. Bei beiden hier beschriebenen Schritten handelt es sich um räumliche Transformationen, die mit an sich bekannten Matrizenrechnungen durchführbar sind.

Je nach Größe und topologischen Konditionen kann ein Teil oder alle der Schritte (b) bis (f) an jeweils derselben Position oder unterschiedlichen Positionen des Fahrzeugs durchgeführt werden.

Die Landmarke kann einen aktiven Sender und/oder einen passiven Reflektor umfassen. Der aktive Sender kann von der Messeinrichtung aus mit einem Funksignal beaufschlagt werden, das eine Antwort der aktiven Landmarke triggert. Anhand der Laufzeit der Signale kann der Abstand berechnet werden, und durch Anbringung mehrerer, räumlich versetzter Empfangsantennen am Fahrzeug kann auch die Ausrichtung der Landmarke evaluiert werden. Alternativ sendet der aktive Sender der Landmarke ein zeitkodiertes Signal, das auf dem Fahrzeug an unterschiedlichen Stellen empfangen und dekodiert wird, um den Abstand und die Ausrichtung der Landmarke zu erfassen. Bei einem passiven Reflektor wird die Laufzeit eines von der Messeinrichtung abgesandten und wieder von ihr empfangenen, reflektierten Signals gemessen.

Es ist auch denkbar, den Abstand der Landmarke vom Fahrzeug durch eine Auswertung zweier gemeinsam erfasster Landmarken mit bekanntem Abstand zu erfassen, was insbesondere mittels einer (monokularen oder stereoskopischen) Kamera durchgeführt werden kann. Die Kamera kann auch eine (bekannte) Abmessung der Landmarke erfassen, wie Höhe oder Breite, anhand der auf den Abstand der Landmarke von der Messeinrichtung zurückgeschlossen wird. Alternativ oder zusätzlich kann die Erfassung der Landmarke von dem an unterschiedliche Positionen verbrachten Fahrzeug aus erfolgen, sodass die Position der Landmarke durch Triangulation genau bestimmt werden kann.

Die Ausrichtung der Landmarke und des Abstandes der Landmarke gegenüber dem Fahrzeug kann, wie bereits mehrfach erwähnt, unter Verwendung elektromagnetischer Wellen erfasst werden. Hierbei kann es sich um Radiowellen, Radarwellen, Mikrowellen, infrarotes oder sichtbares Licht handeln.

Analog zur Lehre des Anspruchs 1 umfasst eine erfindungsgemäße Anordnung zur Kartierung eines landwirtschaftlichen Feldes ein Fahrzeug mit einer Messeinrichtung zum Erfassen von Landmarken, einem Positionsbestimmungssignalempfänger, einem Sensor zur Bestimmung der Orientierung des Fahrzeugs im Raum und einem Prozessor, der mit der Messeinrichtung, dem Positionsbestimmungssignalempfänger und dem Sensor verbunden und programmiert ist, die Position des Positionsbestimmungssignalempfängers sowie die Orientierung des an eine Position auf dem Feld oder in der Nähe des Felds verbrachten Fahrzeugs sowie den Abstand einer an einem definierten Punkt des Felds angebrachten Landmarke von der Messeinrichtung und die räumliche Ausrichtung der Landmarke gegenüber dem Fahrzeug zu erfassen und daraus die Position der Landmarke zu berechnen und abzuspeichern.

### Ausführungsbeispiel

In den Zeichnungen ist ein nachfolgend näher beschriebenes Ausführungsbeispiel der Erfindung dargestellt. Es zeigt:
- Fig. 1: eine schematische Ansicht eines erfindungsgemäßen Fahrzeugs bei der Vermessung eines Feldes,
- Fig. 2: eine Draufsicht auf das Fahrzeug der Figur 1, und
- Fig. 3: ein Flussdiagramm für eine Vorgehensweise, nach der ein Prozessor des Fahrzeugs bei der Vermessung vorgeht.

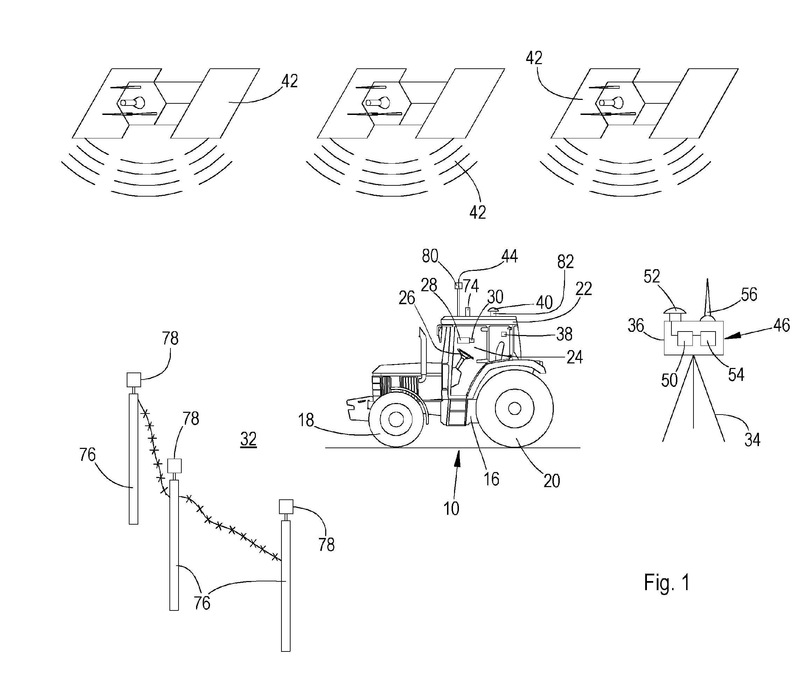

Die Figur 1 zeigt eine seitliche Ansicht eines landwirtschaftlichen Fahrzeugs 10 in Form eines Traktors. Das Fahrzeug 10 baut sich auf einem tragenden Rahmen 16 auf, der sich auf lenkbaren Vorderrädern 18 und antreibbaren Hinterrädern 20 abstützt und eine Kabine 22 trägt, in der sich ein Bedienerarbeitsplatz 24 befindet. Der Bedienerarbeitsplatz 24 umfasst ein Lenkrad 26, einen Sitz, Pedale (nicht gezeigt) und ein virtuelles Terminal 28. Das virtuelle Terminal 28 ist mit einer Datenübertragungseinrichtung 30 verbunden, die in der dargestellten Ausführungsform ein serieller Datenbus ist.

Die Datenübertragungseinrichtung 30 ist weiterhin mit einem elektronischen Prozessor 38, der direkt (über Kabel) oder über die Datenübertragungseinrichtung 30 mit einem Positionsbestimmungssignalempfänger 40 zum Empfang von Signalen von Satelliten 42 eines Positionsbestimmungssystems (z.B. GPS, Glonass und/oder Galileo) und einer Empfangseinheit 74 verbunden ist, die zum Empfang von auf Radiowellen aufmodulierten Korrekturdaten dient, die von einer mobilen Referenzstation 46 über ein geeignetes, beliebiges Protokoll abgestrahlt werden. Die Referenzstation 46 könnte auch stationär sein oder sich aus einem Netz von stationären Referenzstationen zusammensetzen.

Die mobile Referenzstation 46 umfasst ein dreibeiniges Stativ 34, auf dem ein Gehäuse 36 befestigt ist, das einen elektronischen Prozessor 50 enthält, der mit einem

Positionsbestimmungssignalempfänger 52 und über eine Sende- und Empfangseinheit 54 mit einer Radioantenne 56 verbunden ist. Die mobile Referenzstation wird im Betrieb am Rand eines Felds 32 oder an einer anderen, geeigneten Stelle aufgestellt. Der Positionsbestimmungssignalempfänger 52 beaufschlagt den Prozessor 50 mit Positionssignalen, die er aus Signalen ableitet, die er von den Satelliten 42 empfängt. Der Prozessor 50 erzeugt anhand der Positionssignale Korrekturdaten, die durch die Sende- und Empfangseinheit 54 auf Radiofrequenzen aufmoduliert und über die Radioantenne 56 abgestrahlt werden.

Weiterhin ist auf dem Dach der Kabine 22 eine Messeinrichtung 44 angebracht. Bei dieser Messeinrichtung 44 handelt es sich beispielsweise um einen zweidimensional abtastenden Laser-Entfernungsmesser, der Laserstrahlen abstrahlt und reflektierte Laserstrahlen empfängt und die Laufzeit der Laserstrahlen evaluiert. Dabei wird kontinuierlich ein Winkelbereich in horizontaler Richtung und ein Winkelbereich in vertikaler Richtung abgetastet. Die Messeinrichtung 44 erzeugt demnach ein dreidimensionales Entfernungsbild, in dem die Laufzeit der Laserstrahlen als Funktion des horizontalen und vertikalen Winkels aufgetragen ist. Derartige Messeinrichtungen sind an sich bekannt, vgl. DE 10 2008 015 277 A1 und den dort zitierten Stand der Technik.

Das Feld 32, dessen äußeren Grenzen zu bestimmen sind, ist durch einen Zaun mit Pfosten 76 umgrenzt, an deren Oberseite Landmarken 78 befestigt sind, bei denen es sich beispielsweise um übliche Reflektoren für Licht handeln kann, wie sie bei Fahrrädern etc. verwendet werden. Hierzu können beispielsweise Reflexfolien oder Katzenaugen eingesetzt werden.

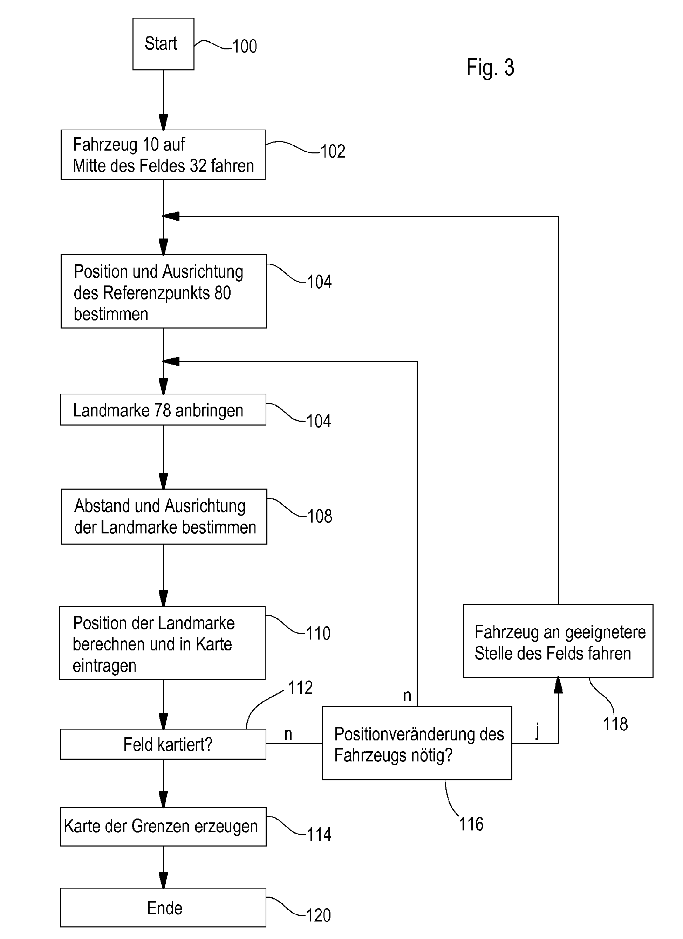

Die Figur 3 zeigt eine mögliche, erfindungsgemäße Vorgehensweise bei der Kartierung des Feldes 32. Nach dem Start im Schritt 100 wird das Fahrzeug 10 im folgenden Schritt 102 an eine geeignete Stelle des Felds 32 verbracht, von der aus möglichst sämtliche Grenzen des Feldes 32 einsehbar sind. Sollte eine derartige Stelle nicht verfügbar sein, beispielsweise weil das Feld 32 zu groß ist oder aus topologischen Gründen nicht vollständig einsehbar ist, wird das Fahrzeug 32 zunächst an eine Stelle gebracht, an der ein Teil der Grenzen des Feldes 32 einsehbar ist. Diese Stelle kann sich auf dem Feld 32 befinden oder in dessen Nähe, z.B. auf einem benachbarten Feld oder einer Straße.

Es folgt der Schritt 104, in dem durch den Prozessor 38 die dreidimensionale Position und dreidimensionale Ausrichtung des Fahrzeugs 10 und eines Referenzpunkts 80 des Fahrzeugs 10 bestimmt wird. Dazu wird zunächst die dreidimensionale Position des Positionsbestimmungssignalempfängers 52 bestimmt, unter Verwendung der von den Satelliten 42 und von der Empfangseinheit 74 bereitgestellten Signale. Außerdem wird die Ausrichtung des Positionsbestimmungssignalempfängers 52 in drei Dimensionen bestimmt, wozu in dessen Gehäuse (oder außerhalb davon) drei Sensoren 82 eingebaut sind, von denen einer die Neigung in Fahrtrichtung des Fahrzeugs 10, einer die Neigung in seitlicher Richtung und einer die Drehung um die Hochachse erfasst. Hierzu kann auf bekannte Trägheitssensoren, Pendel oder dgl. zurückgegriffen werden, oder es werden insgesamt drei oder mehr räumlich versetzte, z.B. in einem Dreieck angeordnete Positionsbestimmungssignalempfänger 52 verwendet. Anhand der dreidimensionalen Position des Positionsbestimmungssignalempfängers 52 und dessen dreidimensionaler Ausrichtung sowie der bekannten dreidimensionalen Abstände zwischen dem Referenzpunkt 80 und dem Positionsbestimmungssignalempfänger 52 wird dann die dreidimensionale Position und Ausrichtung des Referenzpunkts 80 evaluiert. Hierzu sei beispielhaft auf die Offenbarung der DE 198 30 858 A1 verwiesen, die durch Verweis mit in die vorliegenden Unterlagen aufgenommen wird. Hier liegt der Referenzpunkt 80 in einem Punkt, der einerseits die Drehachse der Messeinrichtung 44 um die Hochachse gegenüber dem Fahrzeug 10 und andererseits die Schwenkachse der Messeinrichtung 44 um die horizontale Achse schneidet.

Im folgenden Schritt 106 wird durch eine Arbeitsperson eine Landmarke 78 oberhalb eines definierten Punkt des Feldes 32 angebracht, bei dem es sich in diesem Ausführungsbeispiel um die Grenze des Feldes 32 handelt. Diese Landmarke 78 kann permanent befestigt werden, z.B. an einem Pfosten 76 angeschraubt oder angenagelt, oder sie wird nur temporär dort aufgestellt, z.B. mittels eines Stativs mit einem mittigen Lot, das möglichst genau über der Grenze positioniert wird.

Es folgt der Schritt 108, in welchem durch den Prozessor 38 (oder einen Prozessor der Messeinrichtung 44, nicht gezeigt) mittels der Messeinrichtung 44 der Abstand der Landmarke 78 von der Messeinrichtung 44 und deren Orientierung im Raum bestimmt werden. Dazu wird im vorliegenden Ausführungsbeispiel das dreidimensionale Entfernungsbild der Messeinrichtung 44 auf besonders gut reflektierende Merkmale hin untersucht, die als Landmarke 78 identifiziert werden. Die zugehörige Entfernung und die vertikalen und horizontalen Winkel, an dem das Merkmal sich befindet, werden abgespeichert.

Im Schritt 110 wird dann durch den Prozessor 38 die Position der Landmarke 78 in einem terrestrischen Referenzsystem berechnet. Dazu werden die dreidimensionale Position und Ausrichtung des Referenzpunkts 80 (Schritt 104) und die dreidimensionale Position und Ausrichtung der Landmarke (Schritt 108) genutzt, um die Position und Ausrichtung des Referenzpunkts 80 um den mit der Messeinrichtung 44 erfassten, dreidimensionalen Versatz der Landmarke 78 gegenüber dem Referenzpunkt 80 zu transformieren und die Position der Landmarke 78 im terrestrischen Referenzsystem zu bestimmen. Auch hier wird auf die Vorgehensweise gemäß DE 198 30 858 A1 verwiesen, die durch Verweis mit in die vorliegenden Unterlagen aufgenommen wird. Außerdem wird die Position der Landmarke 78 in einer Speichereinrichtung des Prozessors 38 abgespeichert.

Es folgt der Schritt 112, in dem abgefragt wird, ob das gesamte Feld 32 kartiert ist. Dazu kann durch den Prozessor 38 eine Untersuchung der bisher abgespeicherten Positionen der Landmarken 78 (Schritt 110) erfolgen. Falls diese eine geschlossene Reihe ohne größere Lücken bilden, ist das Feld 32 kartiert und es folgt der Schritt 114, anderenfalls der Schritt 116.

Im Schritt 116 fragt der Prozessor 38, ob eine Positionsveränderung des Fahrzeugs 10 erforderlich ist. Dazu können entweder die Daten der vorhergehenden Durchläufe der Schritte 106 bis 110 dahingehend evaluiert werden, ob sie dafür sprechen, dass eine nachfolgende Landmarke 78 zu weit entfernt ist, um noch von der Messeinrichtung 44 erfasst zu werden, oder es erfolgt über das virtuelle Terminal 28 eine entsprechende Anfrage an die Arbeitsperson, d.h. den Bediener des Fahrzeugs 10, die dann eine geeignete Antwort in das virtuelle Terminal 28 eingibt.

Ist eine Positionsveränderung nicht erforderlich, folgt wieder ein Schritt 106, in dem die Arbeitsperson auf eine entsprechende, über das virtuelle Terminal 28 abgegebene Anweisung hin die Landmarke 78 (oder eine weitere Landmarke 78) an einen neuen definierten Punkt (d.h. Grenzpunkt) verbringt und der Schritt 108 auf eine Bestätigungseingabe der Arbeitsperson hin durchlaufen wird. Um unnötige Wege zu vermeiden, kann hierzu das virtuelle Terminal 28 vom Fahrzeug 10 getrennt und über eine drahtlose Verbindung (z.B. Infrarot oder Funk, basierend auf einem beliebigen Protokoll, wie Bluetooth, WLAN, GSM, UMTS oder LTE) mit dem Prozessor 38 kommunizieren, oder eine separate Fernbedienung in Form eines Handgeräts (z.B. Smartphone oder Tablet-Computers) verwendet werden, die drahtlos bidirektional mit dem Prozessor 38 kommuniziert, um die Arbeitsperson mit den erwähnten Anweisungen zu versorgen und dessen Rückmeldungen zu empfangen. Die Auswahl des neuen Punkts kann durch die Arbeitsperson erfolgen oder auf eine Anweisung des Prozessors 38 an die Arbeitsperson, z.B. basierend auf einer bereits abgespeicherten, aber relativ ungenauen Karte.

Ist hingegen eine Positionsverlagerung des Fahrzeugs 10 erforderlich, folgt der Schritt 118, in dem das Fahrzeug 10 an eine geeignete Position verbracht wird, um weitere Grenzpunkte des Felds 32 aufzunehmen. Auch hier kann die Arbeitsperson auf eine entsprechende Anweisung über das virtuelle Terminal 28 das Fahrzeug 10 an eine vom Prozessor 38 vorgegebene oder durch die Arbeitsperson ausgewählte Position fahren und der Schritt 104 auf eine Bestätigungseingabe der Arbeitsperson hin durchlaufen werden.

Falls sich im Schritt 112 ergeben hat, dass das gesamte Feld 32 kartiert ist, folgt der Schritt 114, in dem eine Karte der Grenze erzeugt wird. Die in den Schritten 110 erfassten Punkte werden im Schritt 114 in Geraden oder Kurven umgerechnet, die die Grenzen des Feldes definieren. Dabei können aus der Landvermessung bekannte Verfahren verwendet werden, um eine Grenzlinie an die Punkte anzupassen, wie Spline-Fitting. Die Anzahl der erforderlichen Punkte hängt von der Form des Felds 32 ab: bei einem rechteckigen Feld würden vier Punkte an den Ecken ausreichen, während komplexere Formen eine höhere Anzahl an Punkten erfordern, die mit der Komplexität der Form der Grenze ansteigt. Im Schritt 114 kann die im Schritt 110 evaluierte, dreidimensionale Position der Landmarke 78 in eine zweidimensionale Position umgerechnet werden, indem die Höhenkoordinaten entfallen. Dadurch erübrigt sich eine Vermessung der Höhe der Landmarke 78 über dem Boden. Es wäre aber auch denkbar, die dritte Dimension in der Karte der Grenzen mit aufzunehmen, insbesondere bei Landmarken 78 bekannter Höhe. Die erzeugte Karte wird dann in einer Speichereinrichtung des Prozessors 38 abgespeichert. Die Karte kann drahtlos über eine Funkverbindung oder über eine herausnehmbare Speicherkarte auf einen Hof-Computer (nicht gezeigt) übertragen werden, um sie für nachfolgende Aufgaben (insbesondere die Planung und Steuerung einer Maschine zum Ausbringen landwirtschaftlicher Materialien) zu verwenden.

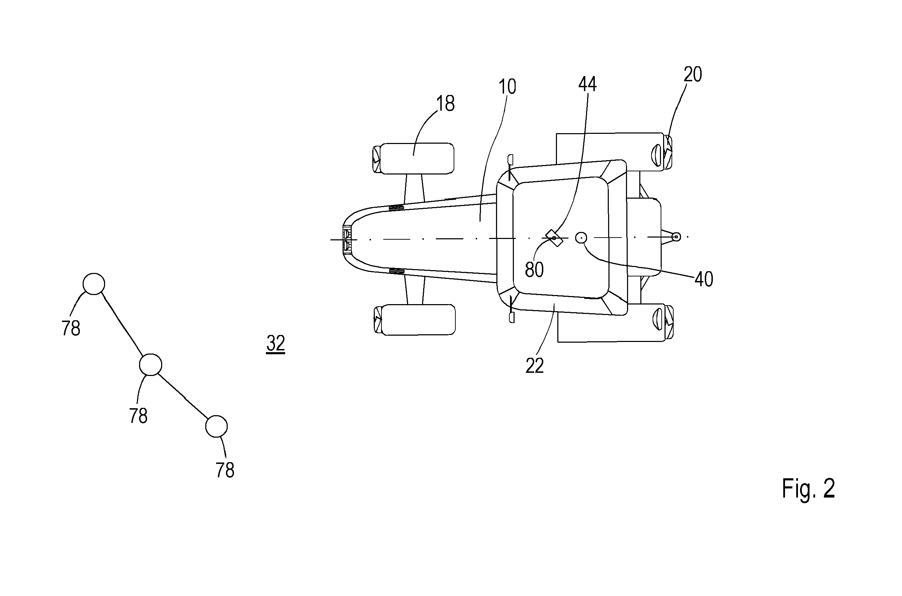

Im Rahmen des der Erfindung zu Grunde liegenden Gedankens sind verschiedene Verfeinerungen, Verbesserungen und Änderungen der anhand der Figuren 1 bis 3 beschriebenen Vorgehensweise möglich.

So kann beispielsweise der Entfernungsmesser 44 durch eine Stereokamera ersetzt werden, die den Abstand zu den Landmarken 78 anhand der Bilder zweier seitlich versetzt angeordneter Kameras evaluiert. Bei in bekanntem Abstand angebrachten Landmarken 78 (oder Landmarken 78 bekannter Höhe und/oder Breite) kann auch eine einfache (Mono-) Kamera verwendet werden, denn anhand des Abstands der Landmarken im Bild bzw. deren Abmessung kann auf die Entfernung der Landmarken 78 geschlossen werden. Bei Verwendung einer Kamera (Stereo oder Mono) und eines Bildverarbeitungssystems können auch die bereits vorhandenen Pfosten 76 als Landmarken 78 verwendet werden, was die Anbringung zusätzlicher Landmarken 78 erübrigt. Auch kann auf ein an der Feldgrenze vorhandenes Merkmal, wie eine Hecke oder ein Graben, als Landmarke 78 zurückgegriffen werden, oder auf eine bei einem vorherigen Bearbeitungsgang erzeugte (Pflug-) Furche oder Pflanzenreihe, welche den Bereich des Feldes begrenzt, der zukünftig zu bearbeiten ist. Die im Kontext mit der vorliegenden Erfindung definierten Feldgrenzen müssen somit nicht mit den durch Grenzsteine definierten Gemarkungsfläche übereinstimmen, sondern können auch einen demgegenüber kleineren, zu bearbeitenden Bereich definieren.

Es wäre auch denkbar, die Landmarke mit einem definierten Muster, z.B. einem Barcode oder QR-Code, zu versehen, um sie später im von der Kamera aufgenommenen Bild identifizieren zu können.

Ebenfalls besteht die Möglichkeit, die Vermessungen der Landmarken 78 mit einer Monokamera während der Fahrt oder von mehreren Standpunkten aus durchzuführen. Die Kamera erfasst von verschiedenen Kamera-/Traktorpositionen aus die Winkel (Winkelmessung im Bild über Brennweite und Position und/oder über die Ausrichtung der Kamera) zu den Landmarken 78. Anschließend werden zeitlich synchronisiert die Messungen der Kamera und des Positionsbestimmungssignalempfängers 40 inklusive der Orientierung des Fahrzeuges 10 in ein (terrestrisches) Koordinatensystem transformiert. Die Positionen der Landmarken 78 können trigonometrisch bestimmt werden.

Anstelle der erwähnten elektromagnetischen Wellen des Lasers der Messeinrichtung 44 könnte diese auch mit Radarwellen arbeiten. Dann wären als Landmarke 78 Metallflächen, wie Aluminiumfolie oder Stahlbleche verwendbar. Alternativ oder zusätzlich könnte die Messeinrichtung 44 mit Ultraschallsensoren arbeiten. Es wäre auch eine mechanische Lösung möglich, bei der die Arbeitsperson eine Leine vom Fahrzeug 10 zur Grenze hin zieht und die Länge und Ausrichtung der Leine gegenüber dem Fahrzeug 10 erfasst werden.

Es wäre auch denkbar, die Landmarke 78 mit einem aktiven Sender für elektromagnetische Wellen auszustatten, die entweder zu festgelegten Zeiten abgestrahlt oder durch die Messeinrichtung 44 getriggert werden.

Die Landmarken 78 können permanent an den Pfosten 76 verbleiben oder nach erfolgter Messung wieder davon abgenommen werden. Wenn sie nicht wieder abgenommen werden, kann die oben beschriebene Messung bei nachfolgenden Bearbeitungsgängen wiederholt werden, was die Genauigkeit der Erfassung der Feldgrenzen erhöht. Bei einer Nachbearbeitung der Messpunkte von mehreren, zeitlich aufeinanderfolgenden, redundanten Messungen kann z.B. durch Bestimmung des Schwerpunktes der Punktcluster oder Anpassung der Mittelpunkte nach einem Verfahren der kleinsten Fehlerquadrate unter Berücksichtigung der Fehlerbänder die Genauigkeit des Positionsbestimmungssignalempfängers 40 und der Messeinrichtung 44 sogar unterschritten werden.

## Patentansprüche

1. Verfahren zur Kartierung eines landwirtschaftlichen Feldes (32), mit folgenden Schritten:
(a) Ausrüsten eines Fahrzeugs (10) mit einer Messeinrichtung (44) zum Erfassen von Landmarken (78), einem Positionsbestimmungssignalempfänger (40) und einem Sensor (82) zur Bestimmung der Orientierung des Fahrzeugs (10) im Raum,
(b) Verbringen des Fahrzeugs (10) an eine Position auf dem Feld (32) oder in der Nähe des Felds (32),
(c) Bereitstellen einer Landmarke (78) an einer definierten Position des Felds (32),
(d) Erfassen der Position des Positionsbestimmungssignalempfängers (40) sowie der Orientierung des Fahrzeugs (10),
(e) Erfassen des Abstandes der Landmarke (78) von der Messeinrichtung (44) und der räumlichen Ausrichtung der Landmarke (78) gegenüber dem Fahrzeug (10),
(f) Berechnen der Position der Landmarke (78) anhand der Ergebnisse der Schritte (d) und (e) und Abspeichern der berechneten Position,
(g) Wiederholen der Schritte (c) bis (f) an weiteren definierten Punkten des Felds (32), bis das Feld (32) kartiert ist.

2. Verfahren nach Anspruch 1, wobei die Messeinrichtung (44) einen winkelsensitiven Sensor zur Erfassung der Landmarke (78) umfasst und/oder gegenüber dem Fahrzeug (10) winkelverstellbar und mit Mitteln zur Erfassung des jeweiligen Winkels gegenüber dem Fahrzeug (10) ausgestattet ist.

3. Verfahren nach Anspruch 1 oder 2, wobei im Schritt (f) zunächst anhand der Position des Positionsbestimmungssignalempfängers (40) sowie der mit dem Sensor (82) erfassten Orientierung des Fahrzeugs (10) die Position und räumliche Orientierung eines auf die Messeinrichtung (44) bezogenen Referenzpunkts (80) berechnet wird und anschließend die Position der Landmarke (78) anhand der Position des Referenzpunkts (80) sowie des Abstandes der Landmarke (78) von der Messeinrichtung (44) und der Ausrichtung der Landmarke (78) gegenüber dem Fahrzeug (10) berechnet wird.

4. Verfahren nach einem der Ansprüche 1 bis 3, wobei ein Teil oder alle der Schritte (b) bis (f) an jeweils derselben Position oder unterschiedlichen Positionen des Fahrzeugs (10) durchgeführt werden.

5. Verfahren nach einem der vorhergehenden Ansprüche, wobei die Landmarke (78) einen aktiven Sender und/oder einen passiven Reflektor umfasst.

6. Verfahren nach einem der vorhergehenden Ansprüche, wobei der Abstand der Landmarke (78) durch Laufzeitmessung erfasst wird.

7. Verfahren nach einem der vorhergehenden Ansprüche, wobei der Abstand der Landmarke (78) durch Auswertung zweier gemeinsam erfasster Landmarken (78) mit bekanntem Abstand und/oder Auswertung einer bekannten Größe der Landmarke (78), wie Höhe und/oder Breite, erfasst wird.

8. Verfahren nach einem der vorhergehenden Ansprüche, wobei die Ausrichtung der Landmarke (78) und des Abstandes der Landmarke (78) gegenüber dem Fahrzeug (10) unter Verwendung elektromagnetischer Wellen erfasst wird.

9. Verfahren nach einem der vorhergehenden Ansprüche, wobei die Messeinrichtung (44) eine stereoskopische oder monokulare Kamera zur Erfassung der Landmarke (78) umfasst, mit der die Landmarke (78) vorzugsweise von unterschiedlichen Positionen des Fahrzeugs (10) aus aufgenommen wird, um deren Position durch Triangulation zu bestimmen.

10. Anordnung zur Kartierung eines landwirtschaftlichen Feldes (32), umfassend ein Fahrzeug (10) mit einer Messeinrichtung (44) zum Erfassen von Landmarken (78), einem Positionsbestimmungssignalempfänger (40), einem Sensor (82) zur Bestimmung der Orientierung des Fahrzeugs (10) im Raum und einem Prozessor (38), der mit der Messeinrichtung (44), dem Positionsbestimmungssignalempfänger (40) und dem Sensor (82) verbunden und programmiert ist, die Position des Positionsbestimmungssignalempfängers (40) sowie die Orientierung des an eine Position auf dem Feld (32) oder in der Nähe des Felds (32) verbrachten Fahrzeugs (10) sowie den Abstand einer an einem definierten Punkt des Felds (32) vorhandenen Landmarke (78) von der Messeinrichtung (44) und die räumliche Ausrichtung der Landmarke (78) gegenüber dem Fahrzeug (10) zu erfassen und daraus die Position der Landmarke (78) zu berechnen und abzuspeichern.
